## Europäisches Patentamt
## European Patent Office
## Office européen des brevets

(19)

(11) Veröffentlichungsnummer : **0 161 373**
**B1**

(12)                          **EUROPÄISCHE PATENTSCHRIFT**

(45) Veröffentlichungstag der Patentschrift :
02.03.88

(51) Int. Cl.⁴ : **C 09 J  3/12**, **C 08 F 236/16** //
(C08F236/16, 212:14)

(21) Anmeldenummer : 84710037.7

(22) Anmeldetag : 15.12.84

(54) **Wässriges Bindemittel zum Aufvulkanisieren von Kautschuk auf Substrate.**

(30) Priorität : 12.01.84 DE 3400851

(43) Veröffentlichungstag der Anmeldung :
21.11.85 Patentblatt 85/47

(45) Bekanntmachung des Hinweises auf die Patenterteilung : 02.03.88 Patentblatt 88/09

(84) Benannte Vertragsstaaten :
AT BE CH DE FR GB IT LI LU NL SE

(56) Entgegenhaltungen :
EP-A- 0 021 186
GB-A- 2 078 238
US-A- 4 483 962
Die Akte enthält technische Angaben, die nach dem
Eingang der Anmeldung eingereicht wurden und die
nicht in dieser Patentschrift enthalten sind.

(73) Patentinhaber : Henkel Kommanditgesellschaft auf
Aktien
Postfach 1100 Henkelstrasse 67
D-4000 Düsseldorf-Holthausen (DE)

(72) Erfinder : Özelli, Riza Nur, Dr.
Stephanusstrasse 37
D-4040 Neuss 22 (DE)
Erfinder : Kohlstadt, Hans-Peter
Virchowstrasse 16a
D-5620 Velbert 1 (DE)
Erfinder : Hoffmann, Hans-Josef
Möhlenring 63
D-4152 Kempen 1 (DE)

**0 161 373**

**Beschreibung**

Die Erfindung betrifft ein verbessertes wäßriges Bindemittel zum Aufvulkanisieren von unterschiedlichen Kautschuktypen auf vulkanisationsstabile Substrate.

Bei Vulkanisationsklebern besteht heute zunehmend der Wunsch, Produkte zur Verfügung zu haben, die bei der Verarbeitung möglichst geringe Mengen an schädlichen und brennbaren Stoffen abgeben. Es hat daher seit einiger Zeit Bestrebungen gegeben, Lösungsmittel durch Wasser zu ersetzen. So wird in dem Europatent 0 021 186 der Anmelderin vorgeschlagen, ein derartiges wäßriges Bindemittel aus Homo- und/oder Copolymeren des Vinylidenchlorids und/oder Butadien-Acrylnitril-Copolymerisaten, aromatischen Nitrosoverbindungen, blockierten Isocyanaten, Polyvinylpyrrolidon und verschiedenen Hilfsstoffen aufzubauen. Wenngleich sich diese Produkte bewährt haben, so bestand doch der Wunsch, die Bindefestigkeit gegenüber polaren Kautschuktypen, wie beispielsweise Nitrilkautschuk zu verbessern und die Wirtschaftlichkeit der Bindemittel weiter zu erhöhen.

Aufgabe der Erfindung ist es somit, ein verbessertes wäßriges Bindemittel zum Aufvulkanisieren von Kautschuk auf vulkanisationsstabile Substrate zu schaffen, das bei polaren wie auch unpolaren Kautschuktypen angewendet werden kann. Eine weitere Aufgabe der Erfindung besteht darin, ein Bindemittel zu schaffen, das aufgrund seiner Konsistenz schon bei vergleichsweise niedrigem Aktivsubstanzgehalt günstige Ergebnisse liefert.

Gegenstand der Erfindung ist somit eine wäßrige Bindemitteldispersion zum Aufvulkanisieren von Kautschuk auf untere Vulkanisationsbedingungen stabile Substrate, bestehend aus

einem halogenhaltigen Polymeren in Latex form
mehrfunktionellen aromatischen Nitrosoverbindungen
verkappten mehrfunktionellen Isocyanaten
Pigmenten, Ruß, Entschäumern, Emulgatoren und
weiteren Hilfsstoffen,

dadurch gekennzeichnet, daß es sich bei dem halogenierten Polymeren um ein Copolymeres aus

einem halogenierten konjugierten Dien
einem alkylierenden Monoalkenyl-aromatischen-Alkylhalogenit
und gewünschtenfalls einer ungesättigten Carbonsäure handelt

und als Hilfsstoffe Verdickungsmittel und gewünschtenfalls weitere übliche Zusatzstoffe vorhanden sind.

Ein weiterer Gegenstand der Erfindung ist die Verwendung der wäßrigen Bindemitteldispersionen zum Aufvulkanisieren von polaren und/oder unpolaren Kautschukmischungen auf vulkanisationsstabile Substrate, insbesondere Metalle oder Aramidfasern.

Den erfindungsgemäßen wäßrigen Bindemitteldispersionen liegt als mengenmäßig wichtigster Bestandteil ein halogeniertes Copolymer in Latexform zugrunde. Dabei besteht das Copolymer aus zwei und gewünschtenfalls drei Arten von Monomeren, nämlich aus halogenierten konjugierten Dienen, alkylierenden Monoalkenyl-aromatischen-Alkylhalogeniden und gewünschtenfalls ungesättigten Carbonsäuren. Copolymere aus den beiden erstgenannten Monomerarten sind auf dem angesprochenen Fachgebiet bereits bekannt. Ihre Herstellung und die Verwendung in Klebstoffen wird bereits in der deutschen Offenlegungsschrift 31 25 286 beschrieben. Aus der genannten Offenlegungsschrift ist jedoch nicht zu entnehmen, daß bei der Mitverwendung ungesättigte Carbonsäuren zur Herstellung des Copolymeren besonders günstige Ergebnisse erzielt werden und daß derartige Copolymeren in vorteilhafter Weise mit blockierten mehrfunktionellen Isocyanaten erfindungsgemäß kombiniert werden können.

Als halogenierte konjugierte Diene zur Herstellung der in den erfindungsgemäßen Bindemitteln verwendeten halogenierten Polymeren können halogenierte Butadiene und/oder Isoprene eingesetzt werden. Dabei ist die Verwendung chlorierter Substanzen bevorzugt, insbesondere die Verbindungen 2-Chlor-1,3-Butadien und 2,3-Dichlor-1,3-Butadien sind bevorzugt.

Die in den erfindungsgemäßen Bindemitteln verwendeten halogenierten Polymeren enthalten weiterhin Monoalkenylaromatische-Alkylhalogenide. Beispiele für derartige Verbindungen sind Vinylbenzylchlorid (p-Chlormethylvinylbenzol), p-Trichlormethylvinylbenzol, p($\alpha$-Chlorethyl)-vinylbenzol, p($\alpha$-Chlorbutyl)-vinylbenzol ; $\alpha$-Chlorvinyl-benzylchlorid ; o,m-Di($\alpha$-Chlorethyl)-vinylbenzol ; 4-Chlormethylvinylnaphthalin, die entsprechenden Brom- und Jodanalogen und dergleichen. Gegenwärtig ist Vinylbenzylchlorid als Monoalkenylaromatisches-Alkylhalogenid bevorzugt.

Bei der Herstellung der halogenierten Polymeren, die den erfindungsgemäßen Bindemitteln zugrunde liegen, ist es bevorzugt ungesättigte Säuren mitzuverwenden. Geeignete ungesättigte Säuren sind beispielsweise Acrylsäure, Methacrylsäure, Itaconsäure, Crotonsäure, Maleinsäure und/oder Fumarsäure.

Bei der Herstellung eines halogenierten Polymeren, welches keine ungesättigten Carbonsäuren enthält, hat sich ein Anteil an halogenierten Dienen von 67 bis 97 Gewichtsprozent, vorzugsweise von 75 bis 97, insbesondere von 92 bis 97 bewährt. Demgegenüber geht man bei der Herstellung der tert. Polymeren, also der halogenierten Polymeren unter Mitverwendung ungesättigter Säuren von 30 bis 96 Gewichtsprozent, vorzugsweise von 70 bis 96 Gewichtsprozent halogenierten Dienen, 2 bis 32 Gewichtsprozent, vorzugsweise 2 bis 10 Gewichtsprozent alkylierenden Monoalkenyl-aromatischen Alkylhalogeniden und 2 bis 50 Gewichtsprozent, vorzugsweise 1 bis 10 Gewichtsprozent ungesättigten Säuren aus.

2

Halogenierte Polymere mit besonders günstigen Eigenschaften lassen sich dabei aus 2,3-Dichlor-1,3-Butadien (zum Beispiel 92 bis 96 Gewichtsprozent) Vinylbenzylchlorid (2,5 bis 4 Gewichtsprozent) und Acrylsäure (3 bis 4 Gewichtsprozent) herstellen.

Die Herstellung von derartigen halogenierten Copolymeren in Latexform ist bereits bekannt. Für Copolymere aus halogenierten Dienen und Monoalkenyl-aromatischen-Alkylhalogeniden ist wie in der eingangs erwähnten deutschen Offenlegungsschrift 31 25 286 beschrieben. Copolymere, die weiterhin noch polymerisierbare Säuren enthalten, lassen sich analog herstellen. Im einzelnen gilt hier das Fachwissen der Polymer-Chemie auf dem Gebiet der Emulsionspolymerisation ethylenisch ungesättigter Verbindungen. So enthalten die Latices der halogenierten Polymeren die üblichen Stoffe, wie Emulgatoren und/oder Schutzkolloide. Der Festgehalt dieser Latices liegt zwischen 30 und 60 Gewichtsprozent.

Der Anteil der halogenierten Polymeren an der Trockensubstanz des Bindemittels beträgt 30 bis 70, vorzugsweise 50 bis 60 Gewichtsprozent.

Die erfindungsgemäßen wäßrigen Bindemittel enthalten als weiteren wichtigen Bestandteil mehrfunktionelle aromatische Nitrosoverbindungen. Dabei handelt es sich um Derivate von Benzol, Naphthalin, Anthracen und/oder Biphenyl mit mindestens 2 Nitroso-Gruppen wie vorzugsweise nicht an direkt benachbarte Ringkohlenstoffatome gebunden sind. Bevorzugt sind hier insbesondere aromatische Dinitroso-Verbindungen zum Beispiel Dinitrosobenzole oder Dinitrosonaphthaline unter diesen die Meta- und Paraverbindungen. Die mehrfunktionellen aromatischen Nitrosoverbindungen können außer den Nitrosogruppen noch beliebige andere Substituenten, beispielsweise Alkylgruppen aufweisen. Beispiele für aromatische Nitrosoverbindungen sind : m-Di-nitrosobenzol, p-Di-nitrosobenzol, m-Di-nitrosonaphthaline, p-Di-nitrosonaphthalin, 2,5-Di-nitroso-p-cymol, 2-Methyl-1,4-di-nitrosobenzol, 2-Methyl-5-chlor-1,4-dinitrosobenzol, 2-Flur-1,4-dinitrosobenzol, 2-Methoxy-1,3-dinitrosobenzol, 5-Chlor-1,3-dinitrosobenzol, 2-Benzyl-1,4-dinitrosobenzol und 2-Cyclohexyl-1,4-dinitrosobenzol.

Die mehrfunktionellen aromatischen Nitrosoverbindungen sind an der Trockensubstanz der wäßrigen Bindemittel mit 15 bis 25 Gewichtsprozent beteiligt. Bei der Herstellung der Bindemittel ist bevorzugt die Nitrosoverbindungen nicht als solche, also etwa in chemisch reiner Form einzusetzen, sondern von Suspensionen auszugehen, insbesondere von Suspensionen in Wasser. Derartige Suspensionen sind im Handel erhältlich.

Als weiteren Bestandteil enthalten die erfindungsgemäßen wäßrigen Bindemittel ein Verdickungsmittel. Zwar können hier auch organische Verdickungsmittel, wie beispielsweise Xanthan, Celluloseether, Polyacrylamid oder Copolymere aus Acrylsäure und ihren Estern eingesetzt werden, doch sind anorganische Verdickungsmittel bevorzugt. Ein ganz besonders bevorzugtes Verdickungsmittel ist Siliciumdioxid in feingepulverter Form mit großer Oberfläche. Derartige für Verdickungszwecke geeignete Siliciumdioxid-Typen sind allgemein bekannt und im Handel erhältlich. Ein geeignetes Produkt wird beispielsweise unter dem Markennamen Aerosil der Firma Degussa AG vertrieben. Der Anteil des Verdickungsmittels an der Trockensubstanz der Bindemittel beträgt 2 bis 10 Gewichtsprozent, vorzugsweise 5 bis 8 Gewichtsprozent. Bei Verwendung, insbesondere der bevorzugten Verdickungsmittel, entstehen wäßrige Bindemitteldispersionen, die aufgrund ihrer erhöhten Viskosität vor dem Trocknen und Härten nicht wegschlagen und es daher erlaubt, mit niedrigem Aktivsubstanzgehalt günstige Ergebnisse zu erzielen. Die Verdickungsmittel können als solche in die wäßrigen Bindemitteldispersionen eingebracht oder eingerührt werden. Es ist jedoch bevorzugt, eine Vorlösung oder im Falle der Verdickungsmittel auf Siliciumdioxidbasis eine Vordispersion herzustellen und diese mit den anderen flüssigen Bestandteilen zu mischen.

Die erfindungsgemäßen wäßrigen Bindemittel enthalten als weitere wichtige Komponente blockierte Isocyanate. Diese leiten sich von den technologisch vielseitig einsetzbaren handelsüblichen Isocyanaten ab, beispielsweise von Toluylendiisocyanat, Naphthalindiisocyanat, Isophorondiisocyanat, Diphenylmethandiisocyanat, dimerisiertem Toluylendiisocyanat, Hexamethylendiisocyanat und anderen mehr, wie mehrfunktionellen Isocyanaten, wie Triphenylmethantriisocyanat oder dem Additionsprodukt von 3 mol Toluylendiisocyanat an 1 mol Trimethylolpropan. Als Mittel zum Verkappen der Isocyanatgruppen eignen sich beispielsweise Phenole, Alkohole, wie tert. Amylalkohol oder tert. Butanol, Acetessigester, Malonester, Acetylaceton, Butanonoxim, Phthalimid, Imidazol oder Natriumhydrogen.

Ein besonders bevorzugtes Produkt ist das Addukt aus einem epoxydiertem Novolak (Epoxidzahl 24, Epoxidwert 56) mit Diphenylmethandiisocyanat im Molverhältnis 1 : 3 verkappt mit Butanonoxim. Die Herstellung derartiger Produkte ist bekannt. Sie wird in einfacher Weise durch Zusammengeben von Epoxid und Diisocyanat und anschließendes Erwärmen auf Temperaturen bis 80° durchgeführt. Das so erhaltene mehrfunktionelle Isocyanat wird dann in ebenfalls bekannter Weise mit Butanonoxim verkappt. Das blockierte Isocyanataddukt ist mit 3 bis 10, vorzugsweise 4 bis 7 Gewichtsprozent am Feststoffanteil des wäßrigen Mittels beteiligt.

Die erfindungsgemäßen Dispersionen können weiterhin noch übliche haftverbessernde Füllstoffe enthalten. Es kommen hier insbesondere Ruß in Mengen von 2 bis 10 Gewichtsprozent Zinkoxid in Mengen von 0,1 bis 2 Gewichtsprozent jeweils bezogen auf Trockenes Bindemittel oder basisches Bleiphosphit und dergleichen mehr in Frage. Weiterhin können Pigmente eingearbeitet werden. Als weitere Bestandteile enthalten die erfindungsgemäßen wäßrigen Bindemittel Emulgatoren in Mengen von 1 bis 8 Gewichtsprozent. Hier sind anionische oder nichtionische Emulgatoren geeignet, so z. B. die Addukte von Ethylenoxid an Alkylphenole wie Nonylphenol oder an Fettalkohole sowie Sulfierungspro-

0 161 373

dukte derartiger Addukte. Weiterhin können Stabilisatoren eingesetzt werden. Hier sind wasserlösliche Kolloide, wie z. B. Celluloseether oder Polyvinylalkohol geeignet. Auch Entschäumer können mitverwendet werden. Die Menge beträgt bevorzugt 0,01 bis 0,6 Gewichtsprozent.

Der Feststoffgehalt der erfindungsgemäßen wäßrigen Bindemittel wird vom Fachmann so gewählt, daß die bei der Verarbeitung gewünschte Konsistenz eingehalten wird. Typischerweise beträgt der Feststoffgehalt 10-30 %, insbesondere 15-25 Gew.-%.

Die erfindungsgemäßen wäßrigen Bindemittel eignen sich zum Verbinden vulkanisierbarer Elastomerer mit einer Vielzahl von Substraten, so beispielsweise mit zahlreichen Metallen wie Eisen, rostfreier Stahl, Blei, Aluminium, Kupfer, Messing, Bronze, Monel-Metalle, Nickel, Zink und dgl. Sie sind ebenfalls geeignet für behandelte Metale, wie phosphatierten Stahl, galvanisierten Stahl und können ebenfalls bei Glas und Keramik-Materialien sowie bei hochschmelzenden Kunststoffen wie beispielsweise Aramid-Fasern eingesetzt werden. Hervorzuheben ist die günstige Wirkung insbesondere beim Aufvulkanisieren polarer Kautschuke, z. B. von Nitrilkautschuk auf Aramid-Fasern oder Metalle.

Die Bindemittel werden auf die Substratoberflächen in konventioneller Weise, etwa durch Eintauchen, Aufsprühen, Aufbürsten und dgl. aufgetragen. Unter Umständen kann es zweckmäßig sein, eine Vorbehandlung mit einem haftverbessernden Mittel (Primer) aus chloriertem Kautschuk, Phenolharz oder dgl. durchzuführen. Die Substratoberflächen werden nach dem Beschichten trocknen gelassen, bevor sie zusammengebracht werden. Nachdem die Oberflächen zusammengefügt worden sind, werden die Verbundstrukturen in konventioneller Weise erhitzt, um die Vulkanisation herbeizuführen.

Beispiele

Herstellung von Kautschukmischungen

In den folgenden Beispielen wurden die mit A, B, C, D und E bezeichneten Kautschukmischungen auf Substrate aufvulkanisiert. Nachstehend werden zunächst die Zusammensetzungen der Mischungen sowie die Vulkanisationsbedingungen angegeben.

Mischung A (NBR)

| | |
|---|---|
| Nitrilkautschuk (42 % Acrylnitril) | 100,0 Gew.-Teile |
| Stearinsäure | 1,0 Gew.-Teile |
| Zinkoxid | 5,0 Gew.-Teile |
| Dibutylphthalat | 10,0 Gew.-Teile |
| SFR-Ruß | 65,0 Gew.-Teile |
| Terpenharz | 10,0 Gew.-Teile |
| Tetramethylthiuramdisulfid | 0,31 Gew.-Teile |
| Schwefel | 1,0 Gew.-Teile |

Vulkanisationsbedingungen: 15 min bei 160 °C

Mischung B (NBR)

| | |
|---|---|
| Nitrilkautschuk (38 % Acrylnitril) | 100,0 Gew.-Teile |
| Stearinsäure | 1,0 Gew.-Teile |
| ZnO | 3,0 Gew.-Teile |
| SRF-Ruß | 30,0 Gew.-Teile |
| Winnofil S (Kreide) | 20,0 Gew.-Teile |
| Alterungsschutzmittel Phenyl | 2,0 Gew.-Teile |
| Vulkacit Thiuram (Tetramethylthiuramdisulfid) | 2,5 Gew.-Teile |
| Vulkacit CZ (Benzothiazyl-cyclohexylsulfenamid) | 0,5 Gew.-Teile |
| Schwefel | 0,2 Gew.-Teile |

Vulkanisation : 5 min bei 175 °C

Mischung C (CR)

| Mischungsbestandteile | Gew.-Teile |
|---|---|
| Baypren 210 (2-Chlor-Butadien 1.3-Polymerisat) | 100,0 |
| ASM-PAN (Phenyl-$\alpha$-naphthylamin) | 1,5 |
| Stearinsäure | 2,0 |

4

(Fortsetzung)

| Mischungsbestandteile | Gew.-Teile |
|---|---|
| Sterling MT (Ruß ) | 100,0 |
| Ozonwachs III | 1,5 |
| Schwefel | 0,6 |
| Winnofil S (Kreide ) | 70,0 |
| Ingralen 450 (Mineralöl aromat.) | 20,0 |
| Vulkacit Thiuram MS (Tetramethyl-thiurammonosulfid) | 1,0 |
| Mennige | 20,0 |

Mischung D (CSM)

| | |
|---|---|
| chlorsulfoniertes Polyethylen | 100,0 Gew.-Teile |
| Tegoglätte (Bleioxid) | 25,0 Gew.-Teile |
| ECC Devolite (Aluminiumsilikat) | 80,0 Gew.-Teile |
| Durex O (Ruß) | 30,0 Gew.-Teile |
| Ingraplast S (Mineralöl) | 35,0 Gew.-Teile |
| NBC (Nickeldibutyldithiocarbamat) | 0,5 Gew.-Teile |
| Vulkacit DM (Dibenzothiazoldisulfid) | 0,5 Gew.-Teile |
| Tetrone A (Dipentamethylenthiuramtetrasulfid | 2,0 Gew.-Teile |

Mischung E (EPDM)

| | | |
|---|---|---|
| Keltan 812 (EPDM) | 100 | Gew.-Teile |
| ZnO | 5 | Gew.-Teile |
| Stearinsäure | 2 | Gew.-Teile |
| Ruß FEF | 90 | Gew.-Teile |
| Sillitin N (Kieselsäure) | 55 | Gew.-Teile |
| Sunpar 2280 (Mineralöl) | 70 | Gew.-Teile |
| Ca O (Oberfläche mit Fettsäure behandelt) | 6 | Gew.-Teile |
| Vaseline | 5 | Gew.-Teile |
| Royalac 133 (Dithiocarbamat/Thiazol-Gemisch | 1 | Gew.-Teile |
| Vulkacit Mercapto (Mercaptobenzthiazol | 1,25 | Gew.-Teile |
| DPTT (Dipentamethylen-thiuramtetrasulfid | 1 | Gew.-Teile |
| P extra N (Zink-ethylphenyldithiocarbamat) | 1,9 | Gew.-Teile |
| Sulfasan R (Dithiodimorpholin) | 1 | Gew.-Teile |
| Schwefel | 0,5 | Gew.-Teile |

**Patentansprüche**

1. Wäßrige Bindemitteldispersion zum Aufvulkanisieren von Kautschuk auf unter Vulkanisationsbedingungen stabile Substrate, bestehend aus
einem halogenhaltigen Polymeren in Latexform
mehrfunktionellen aromatischen Nitrosoverbindungen
verkappten mehrfunktionellen Isocyanaten
Pigmenten, Ruß, Entschäumern, Emulgatoren und
weiteren Hilfsstoffen,
dadurch gekennzeichnet, daß es sich bei dem halogenierten Polymeren um ein Copolymeres aus
einem halogenierten konjugierten Dien
einem alkylierenden Monoalkenyl-aromatischen-Alkylhalogenit
und gewünschtenfalls einer ungesättigten Carbonsäure handelt
und als Hilfsstoffe Verdickungsmittel und gewünschtenfalls weitere übliche Zusatzstoffe vorhanden sind.

2. Wäßrige Bindemitteldispersion nach Anspruch 1, dadurch gekennzeichnet, daß es sich bei dem

5

0 161 373

halogenierten Copolymeren um ein Copolymeres aus halogeniertem Butadien und/oder Isopren mit einem polymerisierbarem Benzylhalogenid und mit einer ungesättigten Carbonsäure handelt.

3. Wäßrige Bindemitteldispersionen nach den Ansprüchen 1 und 2, dadurch gekennzeichnet, daß das halogenierte Copolymere aus 30 bis 96 Gewichtsprozent halogeniertem Butadien, vorzugsweise 2,3-Dichlor-1,3-butadien 2 bis 32 Gewichtsprozent polymerisierbarem Benzylhalogenid, vorzugsweise Vinylbenzylchlorid und 1 bis 10 Gewichtsprozent Acrylsäure und/oder Methacrylsäure besteht.

4. Wäßrige Bindemitteldispersionen nach den Ansprüchen 1 bis 3, dadurch gekennzeichnet, daß als Verdickungsmittel ein anorganisches Verdickungsmittel, insbesondere ein feinverteiltes Siliciumdioxid mit großer innerer Oberfläche enthalten ist.

5. Wäßrige Bindemitteldispersionen nach den Ansprüchen 1 bis 4, dadurch gekennzeichnet, daß der Anteil des halogenierten Polymeren an der Trockensubstanz des Bindemittels 30 bis 70, vorzugsweise 50 bis 60 Gewichtsprozent beträgt.

6. Wäßrige Bindemitteldispersionen nach den Ansprüchen 1 bis 5, dadurch gekennzeichnet, daß der Anteil des Verdickungsmittels an der Trockensubstanz des Bindemittels 2 bis 10, vorzugsweise 5 bis 8 Gewichtsprozent beträgt.

7. Wäßrige Bindemitteldispersionen nach den Ansprüchen 1 bis 6, dadurch gekennzeichnet, daß der Anteil der blockierten Isocyanataddukte an der Trockensubstanz des Bindemittels 3 bis 10, vorzugsweise 4 bis 7 Gewichtsprozent beträgt und daß als blockierte Isocyanataddukte vorzugsweise Umsetzungsprodukte epoxydierter Novolake (Epoxidzahl 24, Epoxidwert 56) mit Diphenylmethandiisocyanat im Molverhältnis 1 : 3, verkappt mit Butanonoxim eingesetzt werden.

8. Wäßrige Bindemitteldispersionen nach den Ansprüchen 1 bis 7, dadurch gekennzeichnet, daß als weitere Bestandteile 0,1 bis 2 Gewichtsprozent Zinkoxid, 2 bis 10 Gewichtsprozent Ruß, 1 bis 8 Gewichtsprozent Emulgatoren, 0,01 bis 0,6 Gewichtsprozent Entschäumer und gewünschtenfalls weitere Zusatzstoffe enthalten sind.

9. Wäßrige Bindemitteldispersionen nach den Ansprüchen 1 bis 8, dadurch gekennzeichnet, daß sie einen Feststoffgehalt von 10 bis 30 Gewichtsprozent, vorzugsweise von 15 bis 25 Gewichtsprozent aufweisen.

10. Verwendung der wäßrigen Bindemitteldispersionen nach den Ansprüchen 1 bis 9 zum Aufvulkanisieren von polaren und/oder unpolaren Kautschukmischungen auf vulkanisationsstabile Substrate, insbesondere Metalle oder Aramidfasern.

## Claims

1. An aqueous binder dispersion for the vulcanization of rubber onto substrates stable under vulcanization conditions, consisting of
    a halogen-containing polymer in latex form
    polyfunctional aromatic nitroso compounds
    masked polyfunctional isocyanates
    pigments, carbon black, foam inhibitors, emulsifiers and
    other auxiliaries,
characterized in that the halogenated polymer is a copolymer of
    a halogenated conjugated diene,
    an alkylating monoalkenyl aromatic alkyl halite
    and, if desired, an unsaturated carboxylic acid and
thickeners and, if desired, other standard additives are present as auxiliaries.

2. An aqueous binder dispersion as claimed in Claim 1, characterized in that the halogenated copolymer is a copolymer of halogenated butadiene and/or isoprene with a polymerizable benzyl halide and with an unsaturated carboxylic acid.

3. An aqueous binder dispersion as claimed in Claims 1 and 2, characterized in that the halogenated copolymer consists of from 30 to 96 % by weight halogenated butadiene, preferably 2,3-dichloro-1,3-butadiene, from 2 to 32 % by weight polymerizable benzyl halide, preferably vinyl benzyl chloride and from 1 to 10 % by weight acrylic acid and/or methacrylic acid.

4. Aqueous binder dispersions as claimed in Claims 1 to 3, characterized in that an inorganic thickener, more especially a finely divided silicon dioxide having a large inner surface, is used as the thickener.

5. Aqueous binder dispersions as claimed in Claims 1 to 4, characterized in that the proportion of the halogenated polymer in the dry matter of the binder is from 30 to 70 and preferably from 50 to 60 % by weight.

6. Aqueous binder dispersions as claimed in Claims 1 to 5, characterized in that the proportion of the thickener in the dry matter of the binder is from 2 to 10 and preferably from 5 to 8 % by weight.

7. Aqueous binder dispersions as claimed in Claims 1 to 6, characterized in that the proportion of the blocked isocyanate adducts in the dry matter of the binder is from 3 to 10 and preferably from 4 to 7 % by weight and in that reaction products of epoxidized novolaks (epoxide number 24, epoxide value 56) with diphenyl methane diisocyanate in a molar ratio of 1 : 3 masked with butanone oxime are preferably used as the blocked isocyanate adducts.

8. Aqueous binder dispersions as claimed in Claims 1 to 7, characterized in that they contain as further constituents from 0.1 to 2 % by weight zinc oxide, from 2 to 10 % by weight carbon black, from 1 to 8 % by weight emulsifiers, from 0.01 to 0.6 % by weight foam inhibitors and, if desired, other additives.

9. Aqueous binder dispersions as claimed in Claims 1 to 8, characterized in that they have a solids content of from 10 to 30 % by weight and preferably from 15 to 25 % by weight.

10. The use of the aqueous binder dispersions claimed in Claims 1 to 9 for the vulcanization of polar and/or apolar rubber mixtures onto vulcanization-stable substrate, more especially metals or aramide fibers.

**Revendications**

1. Dispersion aqueuse de liant pour la vulcanisation de caoutchouc placé sur des supports stables dans les conditions de vulcanisation, composée de :
un polymère halogéné sous forme de latex,
composés nitroso aromatiques polyfonctionnels,
isocyanates polyfonctionnels masqués,
pigments, noir de fumée, agents antimousse, émulsifiants et
autres substances auxiliaires,
caractérisée par le fait qu'en ce qui concerne le polymère halogéné, il s'agit d'un copolymère de :
un diène conjugué halogéné,
un halogénure de monoalcényl-aryl-alkyle
et, si on le désire, un acide carboxylique non saturé
et d'un épaississant en tant que substance auxiliaire et, si on le désire, d'autres additifs usuels sont présents.

2. Dispersion aqueuse de liant selon la revendication 1, caractérisée par le fait qu'en ce qui concerne le copolymère halogéné, il s'agit d'un copolymère de butadiène halogéné et/ou isoprène halogéné et d'un halogénure de benzyle polymérisable, et d'un acide carboxylique non saturé.

3. Dispersions aqueuses de liant selon les revendications 1 et 2, caractérisées en ce que le copolymère halogéné est constitué de 30 à 96 % en poids de butadiène halogéné, de préférence 2,3-dichloro-1,3-butadiène, de 2 à 32 % en poids d'halogénure de benzyle polymérisable, de préférence chlorure de vinylbenzyle, et de 1 à 10 % en poids d'acide acrylique et/ou acide méthacrylique.

4. Dispersions aqueuses de liant selon l'une quelconque des revendications 1 à 3, caractérisées en ce qu'elles contiennent, en tant qu'épaississant, un épaississant inorganique, en particulier un bioxyde de silicium finement divisé, à grande surface intrinsèque.

5. Dispersions aqueuses de liant selon l'une quelconque des revendications 1 à 4, caractérisées en ce que la teneur du polymère halogéné de la matière sèche du liant va de 30 à 70, de préférence de 50 à 60 % en poids.

6. Dispersions aqueuses de liant selon l'une quelconque des revendications 1 à 5, caractérisées en ce que la teneur de l'épaississant de la matière sèche du liant va de 2 à 10, de préférence de 5 à 8 % en poids.

7. Dispersions aqueuses de liant selon l'une quelconque des revendications 1 à 6, caractérisées en ce que la teneur de l'adduct d'isocyanate bloqué de la matière sèche du liant va de 3 à 10, de préférence de 4 à 7 % en poids, et en ce que l'on utilise en tant qu'adducts d'isocyanates bloqués, de préférence des produits de réaction de Novolaques époxydées (nombre d'époxyde : 24, indice d'époxyde : 56) et de diisocyanate de diphénylméthane dans le rapport molaire 1 : 3, bloqués avec du butanone-oxime...

8. Dispersions aqueuses de liant selon l'une quelconque des revendications 1 à 7, caractérisées en ce qu'elles contiennent en tant qu'autres composants 0,1 à 2 % en poids d'oxyde de zinc, 2 à 10 % en poids de noir de fumée, 1 à 8 % en poids d'émulsifiants, 0,01 à 0,6 % en poids d'agent anti-mousse et, si on le désire, d'autres additifs.

9. Dispersions aqueuses de liant selon l'une quelconque des revendications 1 à 8, caractérisées en ce qu'elles présentent une teneur en matières solides de 10 à 30 % en poids, de préférence de 15 à 25 % en poids.

10. Utilisation des dispersions aqueuses de liant selon les revendications 1 à 9 pour la vulcanisation de mélanges de caoutchoucs polaires et/ou non polaires placés sur des supports stables à la vulcanisation, en particulier des métaux ou des fibres aramides.